# EUROPEAN PATENT APPLICATION

(11) **EP 4 718 570 A1**
(43) Date of publication of application: **01.04.2026**
(21) Application number: 24913463.6
(22) Date of filing: 26.11.2024
(51) Int. Cl.: H01M 10/42, H01M 50/538, H01M 50/528, H01M 10/0587

(54) **BATTERY AND BATTERY PACK AND VEHICLE COMPRISING SAME**

(30) Priority: 27.12.2023 KR 20230193545; 17.05.2024 KR 20240064527
(71) Applicant: LG Energy Solution, Ltd., Seoul 07335 (KR)
(72) Inventor: PARK, Chan-Hyeok, Daejeon 34122 (KR); KIM, Jeong-Hyun, Daejeon 34122 (KR); YANG, Dong-Hyun, Daejeon 34122 (KR)
(74) Representative: Goddar, Heinz J.
(86) International application number: PCT/KR2024/018894
(87) International publication number: WO 2025/143570

(57) **Abstract**

A battery according to an embodiment of the present disclosure may include: an electrode assembly having a first uncoated portion extending on a first surface, the first surface including a first area covered by the first uncoated portion and a second area not covered by the first uncoated portion; a battery housing configured to receive the electrode assembly through an opening formed on one side; and a current collector disposed on the first surface of the electrode assembly so as to be electrically connected to the electrode assembly, and having a current collector opening formed in an area corresponding to the second area of the electrode assembly.

## Description

### TECHNICAL FIELD

The present disclosure relates to a battery, and a battery pack and vehicle including the same.

This application is based on and claims priority from Korean Patent Application No. 10-2023-0193545, filed on December 27, 2023, and Korean Patent Application No. 10-2024-0064527, filed on May 17, 2024, with the Korean Intellectual Property Office, the disclosure of which is incorporated herein in its entirety by reference.

### BACKGROUND ART

In cylindrical secondary batteries, electrolyte impregnation is considered as an important factor in implementing high energy density and high output performance. The amount of electrolyte impregnation is closely related to the performance of the battery, and if the impregnation of the electrolyte is reduced due to structural problems, it may lead to degradation of performance of the battery.

Such performance degradation of the battery includes a reduction in the actual capacity compared to the electrode design capacity, an increase in the resistance of the battery itself, the occurrence of uneven battery voltage (low voltage, etc.), the safety issue of secondary battery use due to lithium precipitation, and a reduction in the battery cycle.

Therefore, it is necessary to enhance the impregnation of the electrolyte by improving the structure of the components constituting the battery, thereby improving the performance of the secondary battery.

### DISCLOSURE

### Technical Problem

The present disclosure is designed to solve the problems of the related art, and therefore the present disclosure is directed to providing a battery having a structure with improved electrolyte impregnation properties.

In another aspect, the present disclosure aims to mitigate the risk of side rupture of the battery by concentrating the heat and/or pressure on the center of the electrode assembly rather than the side of the battery housing when there is an issue such as occurrence of a thermal event and/or the increase in internal pressure inside the battery housing, thereby greatly improving the safety of use of the battery and battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery including: an electrode assembly having a first uncoated portion extending on a first surface, the first surface including a first area covered by the first uncoated portion and a second area not covered by the first uncoated portion; a battery housing configured to receive the electrode assembly through an opening formed on one side; and a current collector disposed on the first surface of the electrode assembly so as to be electrically connected to the electrode assembly, and having a current collector opening formed in an area corresponding to the second area of the electrode assembly.

The first uncoated portion may be configured to be bent in a radial direction of the electrode assembly to cover the first surface of the electrode assembly.

The second area may be located further inward than the first area.

The second area may be provided between a circumference of a central winding hole formed in a core of the electrode assembly and a position spaced a predetermined distance apart outward therefrom along a radial direction of the electrode assembly.

The first uncoated portion may be configured so that an overlapping area in which a plurality of layers overlap each other by bending is formed at least partially along the radial direction of the electrode assembly.

The electrode assembly may include a maximum overlapping area in which the number of overlapping layers of the first uncoated portion is maximum.

The second area may be located further inward than the maximum overlapping area.

The current collector may be electrically coupled to the first uncoated portion.

The current collector may be electrically coupled to the battery housing.

The current collector opening may include a plurality of holes provided to be spaced apart from each other in an area corresponding to the second area.

The current collector opening may include a plurality of slits that extend in a circumferential direction of the electrode assembly in an area corresponding to the second area.

The current collector opening may have a current collector hole formed at a position corresponding to the central winding hole of the electrode assembly.

The current collector opening may be formed by expanding the current collector hole.

In another aspect of the present disclosure, there is provided a battery pack including a battery according to an embodiment of the present disclosure.

In another aspect of the present disclosure, there is provided a vehicle including a battery pack according to an embodiment of the present disclosure.

### Advantageous Effects

According to one aspect of the present disclosure, the impregnation property of the electrolyte can be improved in the battery.

According to another aspect of the present disclosure, it is possible to concentrate the heat and/or pressure on the center of the electrode assembly rather than the side of the battery housing when there is an issue such as occurrence of a thermal event and/or the increase in internal pressure inside the battery housing, thereby mitigating the risk of side rupture of the battery and greatly improving the safety of use of the battery and battery pack.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating the structure of an upper portion of a battery according to an embodiment of the present disclosure.
FIG. 2 is a drawing illustrating the battery in FIG. 1 in which the top of a battery housing is open.
FIG. 3 is a drawing illustrating an electrode assembly according to an embodiment of the present disclosure.
FIG. 4 is a partially cross-sectional view of an electrode assembly according to an embodiment of the present disclosure.
FIG. 5 is a drawing illustrating a current collector (first current collector) according to an embodiment of the present disclosure.
FIGS. 6 and 7 are drawings illustrating a current collector having a structure in which the shape of a current collector opening is modified, compared to the current collector illustrated in FIG. 5.
FIG. 8 is a drawing illustrating the structure of a lower portion of a battery according to an embodiment of the present disclosure.
FIG. 9 is a drawing illustrating a battery pack according to an embodiment of the present disclosure.
FIG. 10 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

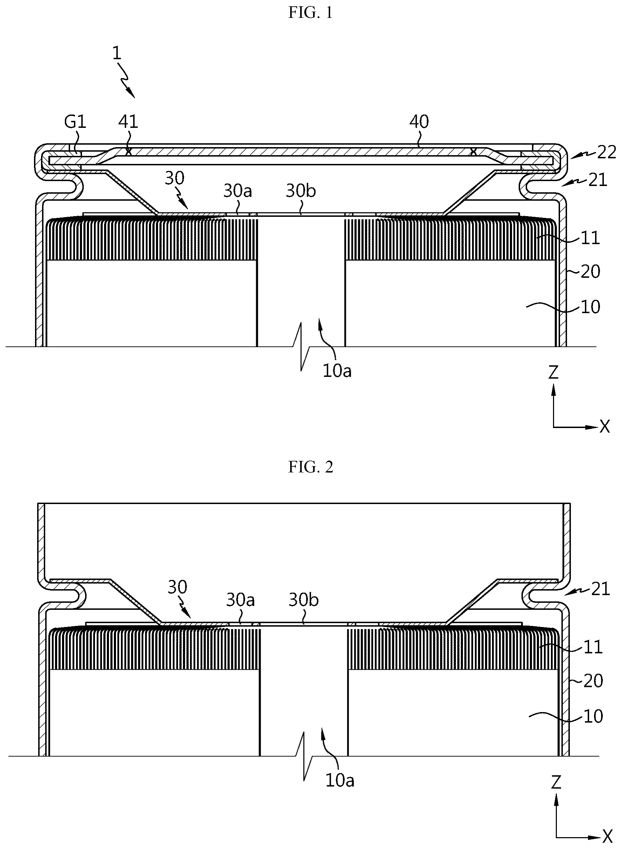

A battery 1 according to an embodiment of the present disclosure will be described with reference to FIGS. 1 to 5.

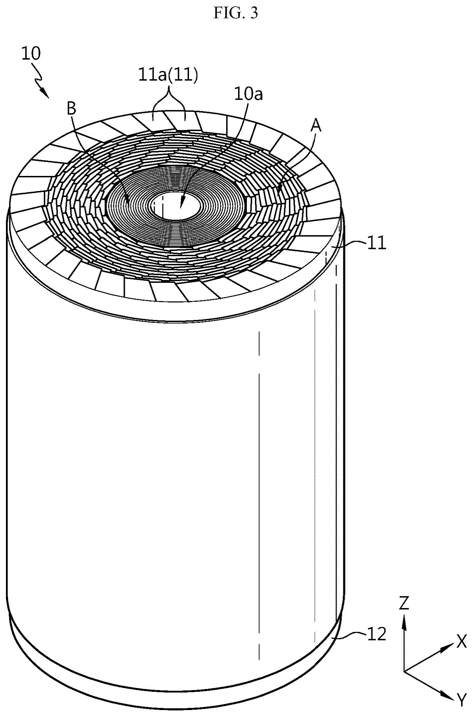

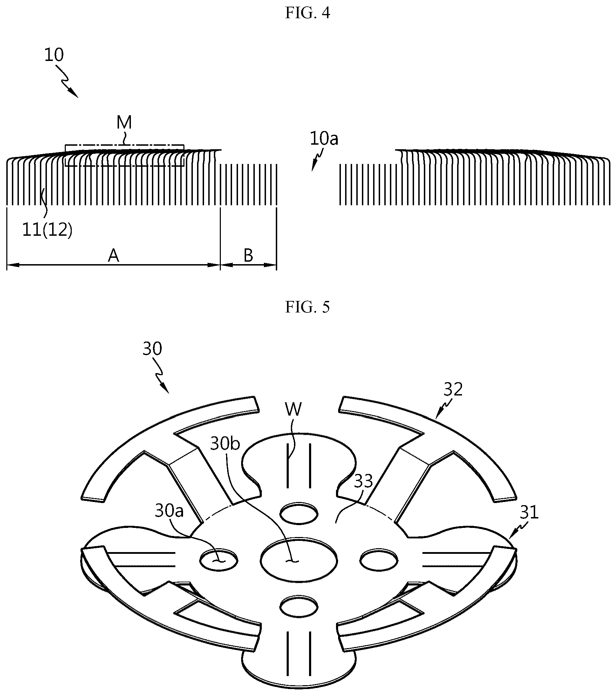

FIG. 1 is a drawing illustrating the structure of an upper portion of a battery according to an embodiment of the present disclosure, and FIG. 2 is a drawing illustrating the battery in FIG. 1 in which the top of a battery housing is open. FIG. 3 is a drawing illustrating an electrode assembly according to an embodiment of the present disclosure, and FIG. 4 is a partially cross-sectional view of an electrode assembly according to an embodiment of the present disclosure. FIG. 5 is a drawing illustrating a current collector (first current collector) according to an embodiment of the present disclosure.

Referring to FIGS. 1 and 3, a battery 1 according to an embodiment of the present disclosure may include an electrode assembly 10, a battery housing 20, and a current collector (first current collector) 30. The battery 1 may include a battery cover 40. The battery 1 may be a secondary battery. The battery 1 may be a cylindrical battery.

The electrode assembly 10 may have a first uncoated portion 11 extending on a first surface. The electrode assembly 10 may be configured to include a first area A covered by the first uncoated portion 11 and a second area B not covered by the first uncoated portion 11. The battery housing 20 may be configured to receive the electrode assembly 10 through an opening formed on one side. The current collector 30 may be configured to be disposed on the first surface of the electrode assembly 10 and electrically connected to the electrode assembly 10. The current collector 30 may have a current collector opening 30a formed in an area corresponding to the second area B of the electrode assembly 10.

Since the battery 1 of the present disclosure has the second area B that is not covered by the first uncoated portion 11 on the first surface of the electrode assembly 10, as described above, the electrolyte may be smoothly impregnated into the electrode assembly 10 when the electrolyte is injected. In addition, since the battery 1 of the present disclosure has a structure in which the current collector 30 disposed on the first surface of the electrode assembly 10 has the current collector opening 30a formed in an area corresponding to the second area B, when the electrolyte is injected while the electrode assembly 10 and the current collector 30 are coupled, the impregnation property of the electrolyte may be prevented from being deteriorated due to the current collector 30.

In another aspect, the present disclosure may concentrate the heat and/or pressure on the center of the electrode assembly 10 rather than the side of the battery housing 20 when there is an issue such as occurrence of a thermal event and/or the increase in internal pressure inside the battery housing 20, thereby mitigating the risk of side rupture of the battery 1 and improving the safety of use of the battery 1. That is, in the event that the temperature and/or pressure increases inside the battery housing 20 of the present disclosure, if the heat and/or pressure acts on the side of the battery housing 20, the event may spread to the neighboring battery 1. In particular, a beading portion 21, which will be described later, may be more vulnerable than other portions due to elongation of the metal of the battery housing 20, so if the event spreads laterally due to the rupture of the beading portion 21, it may significantly deteriorate the safety of use of the battery 1. The battery 1 of the present disclosure may be configured to discharge heat and/or pressure through an open area, i.e., the second area B, which is not covered by the uncoated portion in a part of the electrode assembly 10, thereby preventing the side rupture. In another aspect, the battery 1 of the present disclosure may be configured to discharge heat and/or pressure, released through the second area B as described above, through the current collector opening 30a, thereby maximizing the side rupture prevention effect. Meanwhile, if the battery 1 of the present disclosure is provided with a venting portion 41 to be described below, the pressure released through the second area B and/or the current collector opening 30a may be smoothly discharged to the outside of the battery housing 20, thereby further improving the side rupture prevention effect.

The electrode assembly 10 may have a structure wound around a central winding hole 10a formed in the core. The electrode assembly 10 may include a first electrode, a second electrode, and a separator interposed between the first electrode and the second electrode. The electrode assembly 10 may be manufactured by winding a laminate in which the first electrode, the first separator, and the second electrode are sequentially laminated.

The first electrode may have a first uncoated portion 11 formed in a winding direction at one end. The first uncoated portion 11 may be formed at one end of the first electrode constituting the electrode assembly 10. The first uncoated portion 11 may extend along the winding direction of the electrode assembly 10. The first uncoated portion 11 may be provided on one surface of the electrode assembly 10, and, for example, may extend in the upward direction of the electrode assembly 10.

The first uncoated portion 11 may be configured to bend in the radial direction of the electrode assembly 10 so as to cover the first surface of the electrode assembly 10. For example, the first uncoated portion 11 may bend toward the core along the radial direction of the electrode assembly 10. As described above, the area of the first surface of the electrode assembly 10, i.e., the first area A, which is covered by the bending first uncoated portion 11 may act as an element that prevents the electrolyte from being impregnated into the electrode assembly 10 when the electrolyte is injected. Therefore, by forming an area that is not partially covered by the first uncoated portion 11, i.e., the second area B, on the first surface of the electrode assembly 10, the impregnation property of the electrolyte may be improved. The second area B may be an area obtained by cutting at least a portion of the first uncoated portion 11 of the electrode assembly 10.

The second area B may be located further inward than the first area A. The second area B may be provided between the circumference of the central winding hole 10a formed in the core of the electrode assembly 10 and a position spaced a predetermined distance apart outward therefrom along the radial direction of the electrode assembly 10. As described above, if the second area B configured not to be covered by the first uncoated portion 11 is located in an area adjacent to the core of the electrode assembly 10, the phenomenon of the central winding hole 10a being covered by the bending of the first uncoated portion 11 may be prevented. In the case where the central winding hole 10a is covered by the first uncoated portion 11, the circulation of the electrolyte through the central winding hole 10a may be hindered. In addition, if the central winding hole 10a is covered by the first uncoated portion 11, there may be an obstruction in performing welding parts located at the exit of the central winding hole 10a by radiating a laser beam or inserting a welding tool through the entrance of the central winding hole 10a. Therefore, it may be advantageous for the second area B to be located further inward than the first area A.

At least a part of the first uncoated portion 11 may include a plurality of segments 11a divided along the winding direction of the electrode assembly 10. In this case, the plurality of segments 11a may be bent in the radial direction of the electrode assembly 10. If the segments 11a are formed in the first uncoated portion 11 as described above, the first uncoated portion 11 may be easily bent, thereby preventing the first uncoated portion 11 from being damaged during the bending process.

Referring to FIG. 4 in addition to FIGS. 1 to 3, the first uncoated portion 11 may have an area that is formed at least partially along the radial direction of the electrode assembly 10 such that a plurality of layers overlap each other by bending therein. The electrode assembly 10 having a structure in which the first uncoated portion 11 is bent in a direction toward the core may have a section in which the number of overlapping layers due to the bending of the first uncoated portion 11 gradually increases from the outer surface of the electrode assembly 10 toward the core, a section in which the number of overlapping layers reaches a certain value and remains, and a section in which the number of overlapping layers gradually decreases. Among these sections, the section of the first uncoated portion 11 in which the number of overlapping layers is the maximum will be defined as the maximum overlapping area M. The second area B may be located further inward than the maximum overlapping area M. The maximum overlapping area M may be used for coupling with the current collector 30. The second area B may be located adjacent to the core, and thus the second area B may be used as an area for the injection of the electrolyte.

The battery housing 20 may include a conductive metal. The battery housing 20 may be electrically connected to the electrode assembly 10. An electrolyte may be accommodated together with the electrode assembly 10 inside the battery housing 20. The battery housing 20 may have a beading portion 21 that is recessed inward from the circumference of the outer surface. The beading portion 21 may be provided at a position adjacent to the opening of the battery housing 20. The beading portion 21 may function as a stopper that prevents the electrode assembly 10 from popping out of the battery housing 20. The beading portion 21 may function as a seating portion that supports the battery cover 40. The battery housing 20 may have a crimping portion 22 that is formed to extend and bend from the beading portion 21 so as to wrap around the edge of the battery cover 40.

Referring to FIG. 5 in addition to FIG. 1 to FIG. 4, the current collector 30 of the present disclosure may be electrically coupled to the first uncoated portion 11 of the electrode assembly 10. The current collector 30 may be coupled to the first uncoated portion 11 by welding. The current collector 30 may be coupled to the first uncoated portion 11 within the maximum overlapping area M described above. As described above, if the current collector 30 and the electrode assembly 10 are coupled to each other within the maximum overlapping area M, the risk of the electrode assembly 10 being damaged by the laser beam, radiated for welding, penetrating the first uncoated portion 11 may be minimized.

The current collector 30 may be electrically coupled to the battery housing 20. The current collector 30 may be coupled onto the inner surface of the battery housing 20. The current collector 30 may be coupled onto the beading portion 21 of the battery housing 20. The current collector 30 may be coupled to the battery housing 20 by welding.

The current collector 30 may include a first coupling portion 31 configured to be coupled to the first uncoated portion 11 and a second coupling portion 32 configured to be coupled to the battery housing 20. The current collector 30 may include a base portion 33. The first coupling portion 31 may extend outward from the base portion 33 along the radial direction of the electrode assembly 10. The first coupling portion 31 may be coupled to the first uncoated portion 11 in the maximum overlapping area M. A plurality of the first coupling portions 31 may be provided. The plurality of first coupling portions 31 may be provided to be spaced apart from each other along the circumferential direction of the base portion 33. The second coupling portions 32 may extend outward from the base portion 33 in the radial direction of the electrode assembly 10. The second coupling portions 32 may be coupled onto the beading portion 21 of the battery housing 20. A plurality of second coupling portions 32 may be provided. The plurality of second coupling portions 32 may be provided to be spaced apart from each other along the circumferential direction of the base portion 33. The first coupling portions 31 and the second coupling portions 32 may be configured to be indirectly connected to each other through the base portion 33, instead of being directly connected, thereby minimizing the influence of the impact, applied to one of the coupling portion between the first coupling portion 31 and the electrode assembly 10 and the coupling portion between the second coupling portion 32 and the battery housing 20, on the other.

The current collector opening 30a formed in the current collector 30 may be formed to penetrate the current collector 30. The current collector opening 30a may be located further inward than the weld W formed by welding the first coupling portion 31 and the first uncoated portion 11. Accordingly, the current collector opening 30a may be provided in an area corresponding to the second area B located further inward than the maximum overlapping area M.

Next, the shape of the current collector opening 30a of the present disclosure will be described with reference to FIG. 5 to FIG. 7 in addition to FIG. 1.

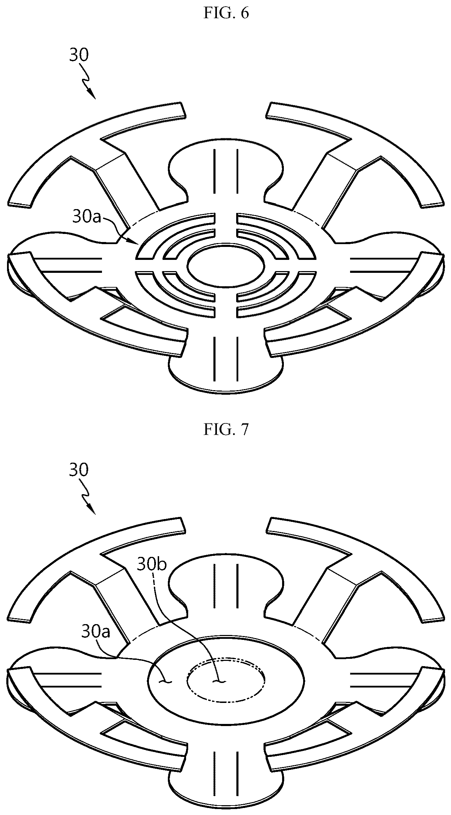

FIGS. 6 and 7 are drawings illustrating a current collector having a structure in which the shape of a current collector opening is modified, compared to the current collector illustrated in FIG. 5.

Referring to FIG. 5 to FIG. 7 in addition to FIG. 1, the current collector opening 30a may include a plurality of holes that are provided to be spaced apart from each other in an area corresponding to the second area B. Referring to FIG. 5, the hole may be approximately circular as shown in FIG. 5. Referring to FIG. 6, the current collector opening 30a may include a plurality of slits that extend along the circumferential direction of the electrode assembly 10 in an area corresponding to the second area B.

The current collector 30 of the present disclosure may have a current collector hole 30b formed approximately at the center. Referring to FIG. 7, the current collector opening 30a may be formed by expanding the current collector hole 30b. That is, the current collector opening 30a may correspond to an area that overlaps the second area B among the entire area of the current collector hole 30b.

Meanwhile, the current collector hole 30b may be provided in an area corresponding to the central winding hole 10a of the electrode assembly 10. The current collector hole 30b may be configured to have a larger diameter or width than the central winding hole 10a. The central winding hole 10a may be located within the current collector hole 30b. In this case, the injection of the electrolyte through the central winding hole 10a may be prevented from being obstructed by the current collector 30. In addition, when the internal pressure of the battery 1 increases, the pressure may be smoothly dissipated through a venting portion 41 of a battery cover 40, which will be described later.

Referring to FIG. 1, the battery cover 40 may be configured to cover the opening of the battery housing 20. The battery cover 40 may be provided with a venting portion 41 configured to be ruptured when the internal pressure of the battery housing 20 exceeds a reference venting pressure. The venting portion 41 may be an area configured to be more vulnerable than surrounding areas of the battery cover 40. For example, the venting portion 41 may be an area having a smaller thickness than the remaining areas of the battery cover 40. The venting portion 41 may be configured to extend to form a closed loop surrounding the approximate center of the battery cover 40. The venting portion 41 may be formed continuously or discontinuously. As described above, in the case where the battery 1 of the present disclosure is provided with the venting portion 41, even if an abnormality occurs in the battery 1, the internal pressure of the battery 1 may be prevented from increasing above a certain level.

Meanwhile, the battery 1 of the present disclosure may include a first gasket G1 interposed between the battery cover 40 and the battery housing 20 in the area covered by the battery cover 40. The first gasket G may strengthen the sealing force in the area covered by the battery cover 40.

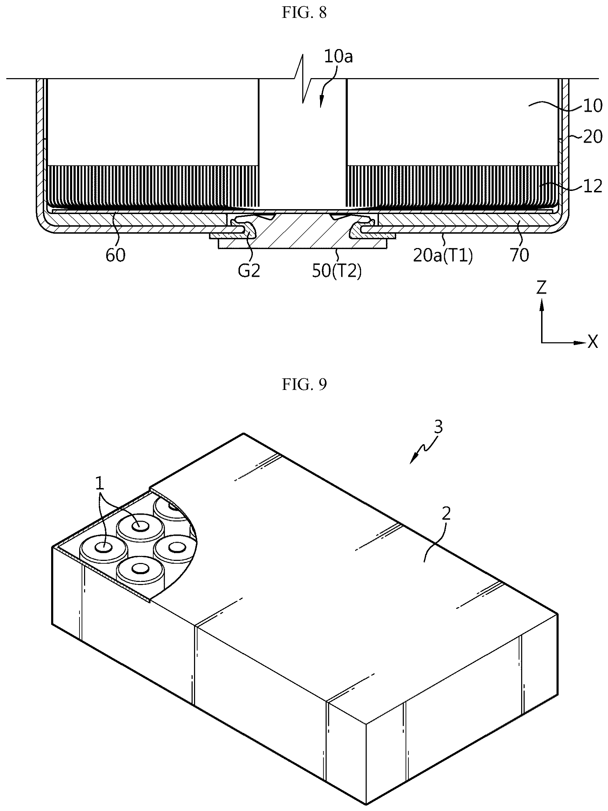

Next, the lower structure of the battery 1 according to an embodiment of the present disclosure will be described with reference to FIG. 8

FIG. 8 is a drawing illustrating the lower portion structure of the battery according to an embodiment of the present disclosure.

Referring to FIG. 8, the battery 1 may include a battery terminal 50. The battery terminal 50 may be electrically coupled to the electrode assembly 10. The battery terminal 50 may be connected to the second electrode of the electrode assembly 10. The battery terminal 50 may be electrically insulated from the battery housing 20. A second gasket G2 may be provided between the battery terminal 50 and the battery housing 20. The second gasket G2 may have electrical insulation properties.

A part of the battery terminal 50 may be inserted into the battery housing 20 through a closed portion 20a provided on the opposite side of the opening of the battery housing 20. As described above, in the case where the battery terminal 50 is provided on the closed portion 20a of the battery housing 20, the closed portion 20a of the battery housing 20 may function as the first electrode terminal T1, and also, the battery terminal 50 may function as the second electrode terminal T2 of the battery 1.

Accordingly, the battery 1 of the present disclosure may have both a positive electrode terminal and a negative electrode terminal provided on the closed portion of the battery housing 20. As described above, in the case where both the positive electrode terminal and the negative electrode terminal are provided on one side of the battery 1, electrical connection of multiple batteries 1 may become easier, and the electrical connection structure may be simplified, thereby improving the energy density.

The battery 1 may include a current collector (second current collector) 60 configured to electrically connect the battery terminal 50 and the electrode assembly 10. The current collector 60 may be electrically connected to the second electrode. The current collector 60 may be electrically coupled to the second uncoated portion 12 provided on the second electrode. The second uncoated portion 12 may extend from one end of the second electrode in the winding direction of the electrode assembly 10. The second uncoated portion 12 may be provided on the side of the electrode assembly 10 opposite the side on which the first uncoated portion 11 is provided, and may extend in the downward direction of the electrode assembly 10.

The current collector 60 may be electrically coupled to the battery terminal 50. For example, a laser beam may be radiated or a tool for welding may be inserted through the central winding hole 10a of the electrode assembly 10 from the opening of the battery housing 20, thereby welding the current collector 60 and the battery terminal 50.

In the case where the battery 1 of the present disclosure has the current collector 60, an insulator 70 may be interposed between the current collector 60 and the closed portion 20a of the battery housing 20. The insulator 70 may prevent contact between the current collector 60 and the battery housing 20 configured to have different polarities from each other.

Next, a battery pack 3 according to an embodiment of the present disclosure will be described with reference to FIG. 9. FIG. 9 is a drawing illustrating a battery pack according to an embodiment of the present disclosure.

Referring to FIG. 9, a battery pack 3 according to an embodiment of the present disclosure may include at least one battery 1 of the present disclosure as described above. The battery 1 may be stored in a pack housing 2. The battery pack 3 may include components for electrical connection of the batteries 1 and/or a BMS (Battery Management System) configured to control charging and discharging of the batteries 1.

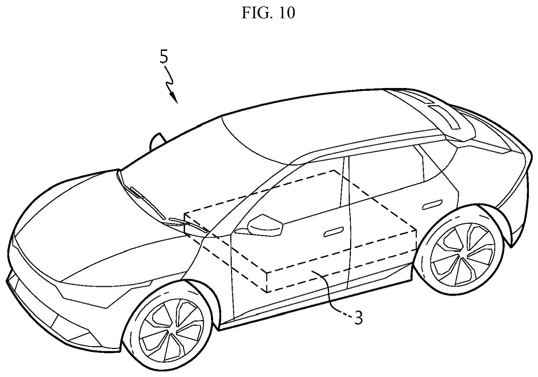

Next, a vehicle 5 according to an embodiment of the present disclosure will be described with reference to FIG. 10. FIG. 10 is a drawing illustrating a vehicle according to an embodiment of the present disclosure.

Referring to FIG. 10, a vehicle 5 according to an embodiment of the present disclosure includes at least one battery pack 3. The vehicle 5 may be configured to operate by power supplied from the battery pack 3. The vehicle 5 may be, for example, a hybrid vehicle HEV or an electric vehicle EV.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

### [Description of Reference numerals]

1: Battery
2: Pack housing
3: Battery pack
5: Vehicle
10: Electrode assembly
10a: Central winding hole
11: First uncoated portion
11a: Segments
12: Second uncoated portion
A: First area
B: Second area
20: Battery housing
20a: Closed portion
T2: Second electrode terminal
21: Beading portion
22: Crimping portion
30: Current collector (first current collector)
30a: Current collector opening
30b: Current collector hole
31: First coupling portion
32: Second coupling portion
33: Base portion
40: Battery cover
41: Venting portion
G1: First gasket
50: Battery terminal
T1: First electrode terminal
G2: Second gasket
60: Current collector (second current collector)
70: Insulator

## Claims

1. A battery comprising:
an electrode assembly having a first uncoated portion extending on a first surface, the first surface comprising a first area covered by the first uncoated portion and a second area not covered by the first uncoated portion;
a battery housing configured to receive the electrode assembly through an opening formed on one side; and
a current collector disposed on the first surface of the electrode assembly so as to be electrically connected to the electrode assembly, and having a current collector opening formed in an area corresponding to the second area of the electrode assembly.

2. The battery according to claim 1,
wherein the first uncoated portion is configured to be bent in a radial direction of the electrode assembly to cover the first surface of the electrode assembly.

3. The battery according to claim 1,
wherein the second area is located further inward than the first area.

4. The battery according to claim 1,
wherein the second area is provided between a circumference of a central winding hole formed in a core of the electrode assembly and a position spaced a predetermined distance apart outward therefrom along a radial direction of the electrode assembly.

5. The battery according to claim 2,
wherein the first uncoated portion is configured so that an overlapping area in which a plurality of layers overlap each other by bending is formed at least partially along the radial direction of the electrode assembly.

6. The battery according to claim 5,
wherein the electrode assembly comprises a maximum overlapping area in which the number of overlapping layers of the first uncoated portion is maximum.

7. The battery according to claim 6,
wherein the second area is located further inward than the maximum overlapping area.

8. The battery according to claim 2,
wherein the current collector is electrically coupled to the first uncoated portion.

9. The battery according to claim 1,
wherein the current collector is electrically coupled to the battery housing.

10. The battery according to claim 1,
wherein the current collector opening comprises a plurality of holes provided to be spaced apart from each other in an area corresponding to the second area.

11. The battery according to claim 1,
wherein the current collector opening comprises a plurality of slits that extend in a circumferential direction of the electrode assembly in an area corresponding to the second area.

12. The battery according to claim 1,
wherein the current collector opening has a current collector hole formed at a position corresponding to the central winding hole of the electrode assembly.

13. The battery according to claim 12,
wherein the current collector opening is formed by expanding the current collector hole.

14. A battery pack comprising a battery according to any one of claims 1 to 13.

15. A vehicle comprising a battery pack according to claim 14.
